# FASCICULE DE BREVET EUROPEEN

(11) **EP 2 854 499 B1**
(45) Date de publication et mention de la délivrance du brevet: **10.01.2018**
(21) Numéro de dépôt: 13730008.3
(22) Date de dépôt: 30.05.2013
(51) Int. Cl.: A01C 7/04

(54) **BOÎTIER DE DISTRIBUTION POUR SEMOIR MONOGRAINE AVEC RAINURES OUVERTES ET SEMOIR UTILISANT UN TEL BOÎTIER**
EINZELKORNSÄMASCHINE UND KORNVEREINZELUNGSSCHEIBE MIT OFFENEN RILLEN
SINGLE GRAIN SEEDER AND SEED SINGULATION DISC WITH OPEN GROOVES

(30) Priorité: 31.05.2012 FR 1255026
(43) Date de publication de la demande: 08.04.2015
(73) Titulaire: KUHN S.A., 67700 Saverne (FR)
(72) Inventeur: AUDIGIE, Jean-Charles, F-67330 Bouxwiller (FR); EBERHART, Julien, F-57370 Veckersviller (FR)
(74) Mandataire: Esch, Esther Evelyne
(86) Numéro de dépôt international: PCT/FR2013/051210
(87) Numéro de publication internationale: WO 2013/178948

(56) Documents cités:
- DE-A1-102008 037 397
- US-A1- 2005 150 442
- US-A1- 2005 204 972
- US-A1- 2010 300 341

## Description

La présente invention se rapporte au domaine technique général du machinisme agricole. L'invention concerne un boîtier de distribution pour semoir monograine avec un disque de distribution muni de rainures radiales, régulièrement espacées et ouvertes sur la périphérie dudit disque, ledit disque étant monté rotatif sur un axe horizontal et séparant un réservoir à graines d'un dispositif d'aspiration de telle sorte que les graines sont prélevées dans le réservoir par ledit disque via le flux d'air en dépression et retenues pendant au moins une partie de leur déplacement angulaire jusqu'à leur expulsion au niveau d'une ouverture de décharge.

Un tel boîtier de distribution pour semoir monograine est présenté dans la demande DE 10 2008 037 397 A1. Ce boîtier de distribution comporte un disque plan rotatif monté sur un axe horizontal. Le disque sélectionne des graines grâce à un flux d'air permettant d'aspirer et de retenir la graine pendant une partie de sa rotation. A cet effet, il dispose de rainures radiales ouvertes vers l'extérieur. Le diamètre des rainures est identique sur toute sa longueur et de taille inférieure à celle des graines. Ainsi, les graines sont aspirées, puis retenues sur les rainures par dépression. Pendant la rotation du disque, les graines sont amenées progressivement vers la périphérie du disque et donc jusqu'à l'ouverture de la rainure pour être libérées. La distribution de graines calibrées et de forme régulière avec un tel disque permet d'obtenir de bons résultats. Le choix du disque, avec une largeur des rainures adaptée à la taille des graines, est plus facile puisque le lot de graines est homogène. Les graines triées s'adaptent mieux aux dimensions des rainures et le nombre de manques ou de doubles est très faible.

Par contre, lorsque la forme des graines est irrégulière ou mal adaptée, le disque via les rainures n'arrive pas à prélever les graines du réservoir ou les graines s'introduisent par deux ce qui engendre plus de manque et/ou de double. La précision du semis est donc altérée.

En outre, la présence de la cavité au niveau de la rainure rend l'expulsion des graines plus difficile, puisque la graine est trop engagée dans la rainure. Le glissement des graines sur la rainure n'est pas régulier et par conséquent l'écartement entre les graines dans le sillon est dégradé.

Le document US 2005/0204972 décrit un boîtier de distribution avec un disque muni de rainures radiales selon le préambule de la revendication 1. La présente invention a pour but de remédier aux inconvénients précités. Elle doit notamment proposer un boîtier de distribution pour semoir monograine qui permet une sélection efficace et une distribution régulière quelle que soit la forme des graines.

A cet effet, une importante caractéristique de l'invention consiste en ce que chaque rainure présente un trou d'aspiration de dimension inférieure à celle des graines à distribuer, ledit trou d'aspiration débouche sur un canal de largeur inférieur au diamètre du trou d'aspiration, ledit canal est ouvert jusqu'à la périphérie du disque. Grâce à cette rainure originale, la distribution des graines est régulière et précise puisqu'elle n'est pas tributaire de la forme, ni de la taille des graines. Par ailleurs, le semis est réalisé sans graines doubles et sans manques. En effet, le trou d'aspiration de dimension adapté à la graine garantit une bonne sélection des graines et le canal assure le glissement de la graine jusqu'à la périphérie du disque où la graine est alors expulsée. Le canal permet de plaquer la graine contre le disque et de guider le glissement de la graine jusqu'à son expulsion. La présence du canal limite l'effort d'aspiration qui retient la graine sur le disque ce qui facilitera l'expulsion de la graine. Cette distribution permet donc un semis où le nombre de manques est très faible même avec un lot de graines hétérogènes. Un écartement régulier et constant entre les graines déposées dans le sillon est donc assuré.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** représente une vue en perspective éclatée d'un boîtier de distribution pour semoir monograine selon la présente invention,
- la **figure 2** est une vue schématique illustrant le fonctionnement du boîtier de distribution,
- la **figure 3** est une vue à plus grande échelle d'une rainure selon l'invention ménagée dans le disque,
- la **figure 4** est une vue de la tranche du disque au niveau d'une rainure.

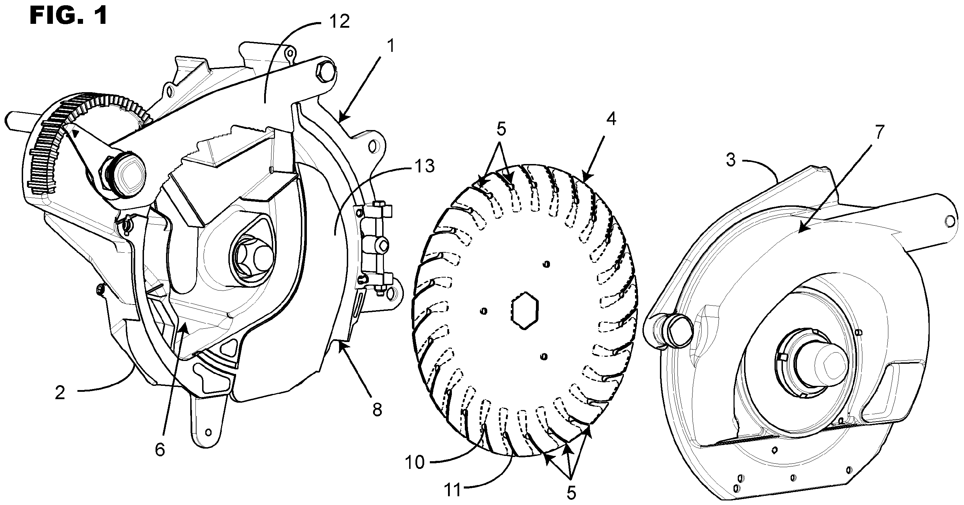

La figure 1 montre une vue éclatée en perspective d'un boîtier de distribution (1) selon l'invention. Un tel boîtier (1) se retrouve généralement sur un semoir monograine qui distribue les graines une à une sur le rang de semis. Un tel semoir monograine est constitué d'un châssis, repliable ou non, qui porte des éléments semeurs. Le châssis est conçu de façon à modifier l'écartement entre les éléments semeurs. Chaque élément semeur possède sa trémie individuelle ou sa trémie alimentée à distance, sa distribution, ses organes d'enterrage, de rappuyage, de recouvrement et de contrôle de profondeur. Chaque élément semeur est monté respectivement sur le châssis au moyen d'un parallélogramme déformable, lequel permet à l'élément semeur de rester parallèle au sol en toutes positions. La distribution ou le boîtier de distribution (1) a pour rôle d'extraire une à une les graines de la trémie et de les répartir à intervalle constant sur le rang. La trémie constitue la réserve de graines et alimente normalement un rang. A titre d'exemple, de tels semoirs monograine sont décrits dans les demandes de brevet FR 2 820 605, FR 2 964 823 et FR 2 920 266.

Le boîtier de distribution (1) comporte un carter (2) de forme générale cylindrique et un couvercle (3). Chaque boîtier de distribution (1) comporte un disque (4) muni de rainures (5) disposées à intervalles réguliers sur un diamètre proche de la périphérie. Les rainures (5) sont radiales, régulièrement espacées et ouvertes sur la périphérie du disque (4). Le nombre de rainures (5) est adapté à l'espèce de graine, c'est-à-dire à la taille et à la forme des graines. Les rainures sont situées au voisinage de la périphérie du disque (4). Ledit disque (4) est monté rotatif dans le carter (2). Dans l'exemple de réalisation, le disque (4) est plan, mince et de faible épaisseur. Il est amené à tourner dans un plan sensiblement vertical, son axe de rotation (4a) est sensiblement horizontal. Le disque (4) sépare un réservoir (6) à graines d'un dispositif d'aspiration (7) de telle sorte que les graines sont prélevées dans le réservoir (6) par le disque (4) via un flux d'air en dépression. Le flux d'air pour la sélection des graines est produit par une turbine entraînée par la prise de force du tracteur. La turbine peut être remplacée par un moteur hydraulique ou électrique. Pendant la rotation du disque (4), les graines sont retenues pendant au moins une partie de leur déplacement angulaire par le flux d'air en dépression jusqu'à leur expulsion au niveau d'une ouverture de décharge (8). Un tube de descente (9) associé à l'ouverture de décharge (8) permet de transporter les graines sélectionnées vers le sol. Des organes d'enterrage associés au tube de descente (9) créent un sillon à une profondeur déterminée pour y placer les graines et les recouvrir de terre. Au niveau de l'ouverture de décharge (8), les graines sont libérées une à une avec un espacement régulier ce qui permet de les placer à un intervalle constant sur le rang.

Selon une importante caractéristique de l'invention, chaque rainure (5) présente un trou d'aspiration (10) de dimension inférieure à celle des graines à distribuer, ledit trou d'aspiration (10) débouche sur un canal (11) de largeur inférieur au diamètre du trou d'aspiration (10), ledit canal (11) est ouvert jusqu'à la périphérie du disque (4). Grâce à cette rainure (5), formée d'un trou d'aspiration débouchant sur un canal (11) étroit, la distribution des graines est régulière et précise. En effet, le trou d'aspiration (10) assure la sélection des graines et le canal (11) plus étroit assure un guidage de la graine jusqu'à la périphérie du disque où elle est libérée.

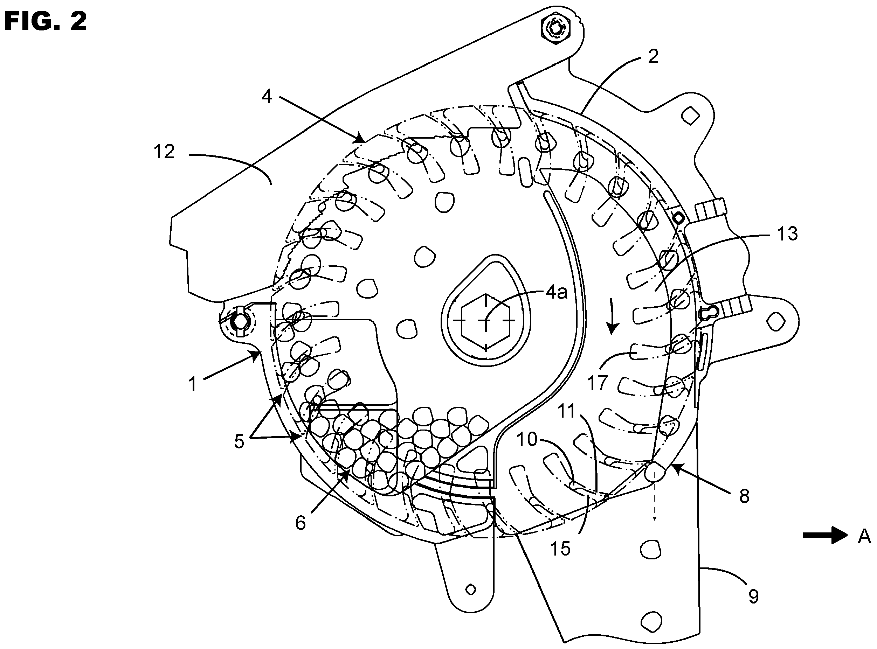

La figure 2 illustre le fonctionnement du boîtier de distribution (1) selon la présente invention. Lors de la rotation du disque (4), les graines sont prélevées dans le fond du boîtier (1) via les rainures (5) soumises au flux d'air en dépression et sont lâchées au niveau de l'ouverture de décharge (8). Le disque (4) plonge dans le fond du boîtier (1) et tourne en emportant des graines sur les rainures (5). Les graines sont retenues par dépression au travers des rainures (5) pendant au moins une partie de leur déplacement angulaire. Les rainures (5) sont soumises à cette dépression jusqu'au voisinage de l'ouverture de décharge (8) des graines. Le disque (4) tourne dans le sens horaire. Le disque (4) est entraîné en rotation via des éléments d'entraînement en fonction de la vitesse d'avance du semoir. Ainsi, la vitesse de distribution est adaptée à la vitesse d'avancement du semoir ce qui permet de semer les graines à des écartements constants. Le disque (4) peut aussi être entraîné par un moteur électrique.

Le boîtier de distribution (1) comporte, en sus du disque (4), un sélecteur (12) et un éjecteur (13). Grâce à ces équipements, la sélection d'une seule graine par rainure (5) et l'éjection de cette graine sont parfaitement contrôlées. Le sélecteur (12) est placé tangentiellement par rapport aux trous d'aspiration (10). Il s'agit d'une plaque dont le bord inférieur est configuré de manière à former une succession de rampes inclinées découpées en dents de scie. La succession de rampe permet d'éliminer les graines doubles situées autour de chaque rainure (5). La direction d'avance du semoir est matérialisée par la flèche (A) sur la figure 2. Dans la suite de la description, les notions "avant" et "arrière" sont définies par rapport à cette direction d'avance (A). Le sélecteur (12) s'étend sensiblement dans le quart arrière et supérieur du carter (2). L'éjecteur (13) est constitué d'un guide qui a pour fonction d'une part de faire glisser la graine vers la périphérie du disque (4) et d'autre part de faciliter son décrochement. L'éjecteur (13) s'étend dans la moitié avant du carter (2). Lors de la rotation du disque (4), les graines arrivant au niveau de l'ouverture de décharge (8) sont poussées en périphérie du disque (4) par le guide. A ce niveau, la dépression cesse derrière le disque (4) ce qui libère les graines une à une. Pour forcer le décrochement des graines, les rainures (5) passent dans la trajectoire du guide. Sur la figure 2 est représentée schématiquement une graine qui vient d'être libérée qui va tomber dans le tube de descente (9). Sa chute se fera de manière quasi-verticale. Grâce à l'éjection mécanique des graines, le temps d'expulsion et la trajectoire des graines sont maîtrisés et le placement des graines dans le sillon est régulier et précis.

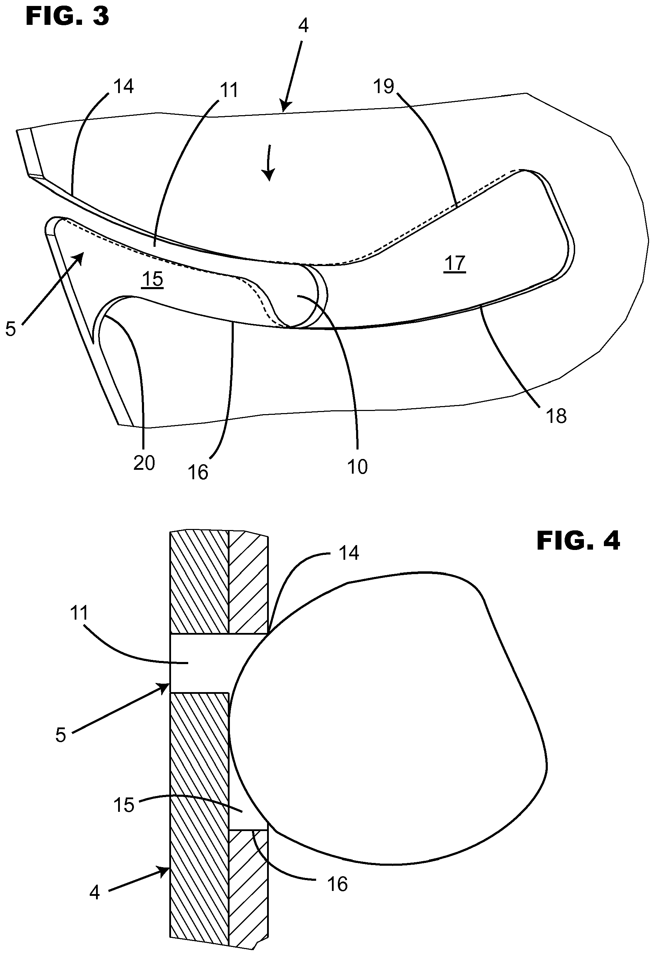

La figure 3 montre plus en détail une rainure (5) ménagée dans le disque (4), il s'agit du côté du disque (4) destiné à recevoir les graines. Chaque rainure (5) est constituée d'un trou d'aspiration (10) et d'un canal (11) qui traverse toute l'épaisseur du disque (4). Le trou d'aspiration (10) présente une section circulaire, dont le diamètre est adapté à la taille et au poids des graines pour que la dépression soit efficace. Le diamètre du trou d'aspiration (10) est inférieur au diamètre des graines. De préférence, le trou d'aspiration (10) présente un diamètre qui correspond à environ la moitié du diamètre moyen des graines. Le canal (11) est réalisé sous la forme d'un trou oblong qui est ouvert sur la périphérie du disque (4). Le diamètre du trou oblong ou la largeur du canal (11) est inférieur au diamètre du trou d'aspiration (10). La dimension en largeur du canal (11) est inférieure à la moitié du diamètre du trou d'aspiration (10). D'une manière avantageuse et représentée à la figure 3, la dimension en largeur du canal (11) représente environ un tiers du diamètre du trou d'aspiration (10). Le canal (11) est tangent à l'arrière du trou d'aspiration (10), compte tenu du sens de rotation du disque (4). Le canal (11) débute au niveau du trou d'aspiration (10) et se poursuit en direction de la périphérie du disque (4) de manière rectiligne ou avec une courbure d'un grand rayon. De préférence et selon la réalisation représentée, le canal (11) est incurvé en direction de la périphérie du disque (4). La courbure est orientée vers l'arrière, compte tenu du sens de rotation du disque (4). Cette orientation de la courbure permet une libération des graines quasiment à la verticale au niveau de l'ouverture de décharge (8). Le canal (11) présente une arête arrière (14) en saillie côté graines, compte tenu du sens de rotation du disque (4). Cette arête arrière (14) définit une rampe de guidage et de glissement des graines du trou d'aspiration (10) vers la périphérie du disque (4). La rampe de guidage est continue et suit le profil du canal (11). Le canal (11) permet de plaquer la graine contre le disque (4) et l'arête arrière (14) et ainsi de guider le glissement de la graine jusqu'à son expulsion. La présence du canal (11) plus étroit limite l'effort d'aspiration qui retient la graine sur le disque (4) et facilite l'expulsion de la graine au niveau de l'ouverture de décharge (8). L'écartement régulier et constant entre les graines déposées dans le sillon est donc assuré.

D'après la figure 3, la rainure (5) comporte également un creux (15). Le creux (15) est ménagé dans une partie de l'épaisseur du disque (4). Le creux (15) est réalisé sur la face côté des graines du disque (4). Le creux (15) est tangent à l'avant du trou d'aspiration (10), compte tenu du sens de rotation du disque (4). Il débute au niveau du trou d'aspiration (10) et se poursuit en direction de la périphérie du disque (4). Le creux (15) délimite une arête avant (16). L'arête avant (16) présente sensiblement le même profil que l'arête arrière (14) du canal (11). La figure 4 représente la tranche du disque (4) au niveau d'une rainure (5) et notamment au niveau du canal (11). Une graine est retenue sur cette rainure (5) par aspiration. Le creux (15) évite aux graines de s'encastrer dans le canal (11) et réalise un plan d'appui pour les graines. Grâce au canal (11) et au creux (15), la rainure (5) est moins sensible à la variation de taille et de forme des graines. Cette distribution permet donc un semis où le nombre de manques et/ou de graines doubles est très faible même avec un lot de graines hétérogènes.

Tel que représenté à la figure 3, la rainure (5) présente, au niveau de la périphérie du disque (4), un dégagement (20) sur sa partie avant compte tenu du sens de rotation du disque (4). Ce dégagement (20) de forme arrondie évite à la graine qui est libérée de toucher le disque (4) lors de son éjection quasi verticale et de prendre une autre trajectoire.

On remarque que la rainure (5) comporte encore un dispositif d'agitation (17) qui réalise un brassage des graines contenues dans le fond du boîtier (1). Les creux (15) et les dispositifs d'agitation (17) sont représentés en traits discontinus sur la figure 1, puisqu'ils sont réalisés dans la surface du disque (4) destinée à être en contact avec le carter (2) du côté des graines. Le dispositif d'agitation (17) est adjacent au trou d'aspiration (10) et s'étend en direction du centre du disque (4). La disposition du dispositif d'agitation (17) sur le disque (4) ne doit pas gêner la prise des graines dans le fond du boîtier (1). Le dispositif d'agitation (17) est réalisé sous la forme d'un évidement ménagé dans l'épaisseur du disque (4) côté graines. Cet évidement dans la surface du disque (4) délimite une face avant (18) et une face arrière (19). La face avant (18) est tangente à l'avant du trou d'aspiration (10) et prolonge l'arête avant (16), suivant le même profil. Dans l'exemple représenté, l'arête avant (16) et la face avant (18) ont une courbure identique à celle du canal (11) et de l'arête arrière (14). La face arrière (19) présente un raccordement tangent sur l'arrière du trou d'aspiration (10) et est dirigée vers l'axe de rotation du disque (4) en s'éloignant de la face avant (18). Avec ces dispositifs d'agitation (17), les graines contenues dans le fond du boîtier (1) sont brassées par la rotation du disque (4) ce qui empêche la formation d'une voûte de tassement. De cette manière, l'application des graines sur les trous d'aspiration (10) est favorisée et un semis régulier sans manque est assuré. Le nombre de dispositifs d'agitation (17) répartis sur le disque (4) est adapté en fonction du type de graines à semer. Pour certaines graines comme la betterave, la présence de dispositif d'agitation (17) n'est pas nécessaire.

Dans l'exemple de réalisation représenté à la figure 3, le disque (4) est réalisé en une seule pièce. Dans une alternative, le disque est réalisé en plusieurs pièces. La figure 4 montre un autre exemple de réalisation dans lequel le disque (4) est réalisé en deux parties. Les deux parties peuvent être réunies par collage.

L'invention trouve son application dans le domaine du semoir, du distributeur de précision. De façon générale, l'invention concerne une machine agricole qui est destinée à travailler sur des lignes ou rangées parallèles qui sont espacées d'un certain écartement.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Boîtier de distribution (1) pour semoir monograine avec un disque (4) muni de rainures (5) radiales, régulièrement espacées et ouvertes sur la périphérie dudit disque (4), ledit disque (4) étant monté rotatif sur un axe horizontal (4a) et séparant un réservoir (6) à graines d'un dispositif d'aspiration (7) de telle sorte que les graines sont prélevées dans le réservoir (6) par ledit disque (4) via le flux d'air en dépression et retenues pendant au moins une partie de leur déplacement angulaire jusqu'à leur expulsion au niveau d'une ouverture de décharge (8), chaque rainure (5) présente un trou d'aspiration (10) de dimension inférieure à celle des graines à distribuer, ***caractérisé en ce que*** ledit trou d'aspiration (10) débouche sur un canal (11) de largeur inférieur au diamètre du trou d'aspiration (10), ledit canal (11) est ouvert jusqu'à la périphérie du disque (4).

2. Boîtier selon la revendication 1, ***caractérisé en ce que*** ledit canal (11) est tangent à l'arrière du trou d'aspiration (10), compte tenu du sens de rotation du disque (4), et sa direction est incurvée ou rectiligne jusqu'à la périphérie du disque (4).

3. Boîtier selon la revendication 1 ou 2, ***caractérisé en ce que*** l'arête arrière (14) qui est en saillie côté graines du canal (11), compte tenu du sens de rotation du disque (4), défini une rampe de guidage et de glissement des graines du trou d'aspiration (10) vers la périphérie du disque (4), la rampe de guidage suit le profil du canal (11).

4. Boîtier selon l'une quelconque des revendications 1 à 3, ***caractérisé en ce que*** la dimension en largeur du canal (11) est inférieure à la moitié du diamètre du trou d'aspiration (10).

5. Boîtier selon l'une quelconque des revendications 1 à 4, ***caractérisé en ce que*** le canal (11) s'étend au travers de toute l'épaisseur du disque (4).

6. Boîtier selon la revendication 2, ***caractérisé en ce que*** lorsque le canal (11) est incurvé en direction de la périphérie du disque (4), la courbure est orientée vers l'arrière compte tenu du sens de rotation du disque (4).

7. Boîtier selon l'une quelconque des revendications 1 à 6, ***caractérisé en ce que*** chaque rainure (5) comporte également un creux (15) constituant un plan d'appui des graines.

8. Boîtier selon l'une quelconque des revendications 1 à 7, ***caractérisé en ce que*** chaque rainure (5) présente un dispositif d'agitation (17) adjacent audit trou d'aspiration (10), ledit dispositif d'agitation (17) s'étend en direction du centre du disque (4).

9. Boîtier selon la revendication 8, ***caractérisé en ce que*** le dispositif d'agitation (17) est réalisé sous forme d'un évidement ménagé côté graines du disque (4), ledit évidement délimite une face avant (18) et une face arrière (19).

10. Boîtier selon la revendication 9, ***caractérisé en ce que*** la face avant (18) est tangente à l'avant du trou d'aspiration (10) et présente un profil sensiblement identique à celui du canal (11) et que la face arrière (19) présente un raccordement tangent sur l'arrière du trou d'aspiration (10) et est dirigée vers l'axe de rotation du disque (4) en s'éloignant de la face avant (18).

11. Boîtier selon l'une quelconque des revendications 1 à 10, ***caractérisé en ce que*** la rainure (5) présente au niveau de la périphérie du disque (4) un dégagement (20) sur sa partie avant, compte tenu du sens de rotation du disque (4).

12. Boîtier selon l'une quelconque des revendications 1 à 11, ***caractérisé en ce que*** le disque (4) est réalisé en une seule pièce ou en deux parties.

13. Semoir monograine pneumatique comportant au moins un boîtier de distribution (1) selon l'une quelconque des revendications 1 à 12.

## Patentansprüche

1. Verteilungskasten (1) für Einzelkornsämaschine mit einer Scheibe (4) mit radialen Rillen (5) in gleichmäßigen Abständen, welche am Außenumfang der Scheibe (4) offen sind, wobei die Scheibe (4) drehend auf einer horizontalen Achse (4a) angeordnet ist und einen Saatbehälter (6) von einer Saugvorrichtung (7) trennt, so dass die Saatkörner durch die Scheibe (4) anhand eines Unterdruckluftstroms aus dem Behälter (6) entnommen und mindestens während eines Teils ihrer Winkelverlagerung zurückgehalten werden, bis sie auf Höhe einer Auswurfsöffnung (8) ausgeworfen werden, wobei jede Rille (5) ein Saugloch (10) aufweist, dessen Durchmesser kleiner als der Durchmesser der zu verteilenden Saatkörner ist, ***dadurch gekennzeichnet*, dass** das Saugloch (10) in einen Kanal (11) führt, der weniger breit als der Durchmesser des Sauglochs (10) ist und der Kanal (11) bis zum Außenumfang der Scheibe (4) offen ist.

2. Kasten nach Anspruch 1, ***dadurch gekennzeichnet, dass*** der Kanal (11) an der Rückseite des Sauglochs (10) im Verhältnis zur Drehrichtung der Scheibe (4) tangential ist und sein Verlauf bis zum Außenumfang der Scheibe (4) gekrümmt oder geradlinig verläuft.

3. Kasten nach Anspruch 1 oder 2, ***dadurch gekennzeichnet, dass*** die hintere Kante (14), welche auf der Seite der Saatkörner des Kanals (11) im Verhältnis zur Drehrichtung der Scheibe (4) hervorsteht, eine Führungs- und Gleitschiene für die Saatkörner des Sauglochs (10) zum Außenumfang der Scheibe (4) darstellt, wobei die Führungsschiene dem Profil des Kanals (11) folgt.

4. Kasten nach einem der Ansprüche 1 bis 3, ***dadurch gekennzeichnet, dass*** die Abmessung des Kanals (11) in der Breite unter der Hälfte des Durchmessers des Sauglochs (10) liegt.

5. Kasten nach einem der Ansprüche 1 bis 4, ***dadurch gekennzeichnet, dass*** sich der Kanal (11) durch die ganze Dicke der Scheibe (4) erstreckt.

6. Kasten nach Anspruch 2, ***dadurch gekennzeichnet, dass*,** wenn der Kanal (11) in Richtung des Außenumfangs der Scheibe (4) gekrümmt ist, die Krümmung im Verhältnis zur Drehrichtung der Scheibe (4) nach hinten ausgerichtet ist.

7. Kasten nach einem der Ansprüche 1 bis 6, ***dadurch gekennzeichnet, dass*** jede Rille (5) ebenfalls eine Vertiefung (15) aufweist, die eine Auflagefläche der Saatkörner darstellt.

8. Kasten nach einem der Ansprüche 1 bis 7, ***dadurch gekennzeichnet, dass*** jede Rille (5) eine dem Saugloch (10) angenäherte Rührvorrichtung (17) aufweist, wobei diese Rührvorrichtung (17) sich in Richtung der Mitte der Scheibe (4) erstreckt.

9. Kasten nach Anspruch 8, ***dadurch gekennzeichnet, dass*** die Rührvorrichtung (17) in Form einer Aussparung auf der Seite der Saatkörner der Scheibe (4) ausgeführt ist, wobei diese Aussparung eine Vorderseite (18) und eine Rückseite (19) begrenzt.

10. Kasten nach Anspruch 9, ***dadurch gekennzeichnet, dass*** die Vorderseite (18) zur Vorderseite des Sauglochs (10) tangential ist und ein Profil aufweist, welches im Wesentlichen identisch mit dem des Kanals (11) ist und die Rückseite (19) einen tangentialen Anschluss der an der Rückseite des Sauglochs (10) aufweist und in Richtung der Drehachse der Scheibe (4) weist, wobei sie sich von der Vorderseite (18) entfernt.

11. Kasten nach einem der Ansprüche 1 bis 10, ***dadurch gekennzeichnet, dass*** die Rille (5) in Höhe des Außenumfangs der Scheibe (4) einen Abstand (20) in ihrem vorderen Bereich im Verhältnis zur Drehrichtung der Scheibe (4) aufweist.

12. Kasten nach einem der Ansprüche 1 bis 11, ***dadurch gekennzeichnet, dass*** die Scheibe (4) aus einem oder aus zwei Teilen ausgeführt wird.

13. Pneumatische Einzelkornsämaschine mit mindestens einem Verteilungskasten (1) nach einem der Ansprüche 1 bis 12.

## Claims

1. Distribution box (1) for a single-seeder with a disc (4) provided with radial grooves (5) that are regularly spaced apart and open on the periphery of the said disc (4), the said disc (4) being rotatably mounted on a horizontal axis (4a) and separating a seed reservoir (6) from a suction device (7) such that the seeds are picked up from the reservoir (6) by the said disc (4) via the air flow by negative pressure and are held over at least part of their angular travel until they are expelled from a discharge opening (8), each groove (5) having a suction hole (10) with a size smaller than that of the seeds to be distributed, ***characterized in* that** the said suction hole (10) emerges on a channel (11) with a width smaller than the diameter of the suction hole (10), the said channel (11) is open up to the periphery of the disc (4).

2. Box according to claim 1, ***characterized in* that** the said channel (11) is tangent at the rear of the suction hole (10), taking account of the direction of rotation of the disc (4), and its direction is curved or rectilinear up to the periphery of the disc (4).

3. Box according to claim 1 or 2, ***characterized in* that** the rear edge (14) that protrudes on the seed side of the channel (11), taking account of the direction of rotation of the disc (4), defines a ramp for guiding and sliding seeds from the suction hole (10) toward the periphery of the disc (4), the guide ramp follows the profile of the channel (11).

4. Box according to any one of claims 1 to 3, ***characterized in* that** the width dimension of the channel (11) is smaller than half of the diameter of the suction hole (10).

5. Box according to any one of claims 1 to 4, ***characterized in* that** the channel (11) extends through the entire thickness of the disc (4).

6. Box according to claim 2, ***characterized in* that** when the channel (11) is curved toward the periphery of the disc (4), the curve is oriented toward the rear taking account of the direction of rotation of the disc (4).

7. Box according to any one of claims 1 to 6, ***characterized in* that** each groove (5) also comprises a hollow (15) constituting a bearing plane for the seeds.

8. Box according to any one of claims 1 to 7, ***characterized in* that** each groove (5) has a stirring device (17) adjacent to the said suction hole (10), the said stirring device (17) extending toward the center of the disc (4).

9. Box according to claim 8, ***characterized in* that** the stirring device (17) is made in the form of a recess arranged on the seed side of the disc (4), the said recess delimiting a front face (18) and a rear face (19).

10. Box according to claim 9, ***characterized in* that** the front face (18) is tangent at the front of the suction hole (10) and has a profile substantially identical to that of the channel (11) and the rear face (19) has a connection tangent at the rear of the suction hole (10) and is oriented toward the axis of rotation of the disc (4) moving away from the front face (18).

11. Box according to any one of claims 1 to 10, ***characterized in* that** the groove (5) has, at the periphery of the disc (4), a recess (20) on its front part taking account of the direction of rotation of the disc (4).

12. Box according to any one of claims 1 to 11, ***characterized in* that** the disc (4) is made in one or several parts.

13. Pneumatic single-seeder comprising at least one distribution box (1) according to any one of claims 1 to 12.
